# EUROPEAN PATENT APPLICATION

(11) **EP 2 472 393 A1**
(43) Date of publication of application: **04.07.2012**
(21) Application number: 11193207.5
(22) Date of filing: 13.12.2011
(51) Int. Cl.: G06F 9/44, G06F 9/445, G06F 3/01, G06F 3/048

(54) **Enablement of culture-based gestures**

(30) Priority: 14.12.2010 US 967528
(71) Applicant: SAP AG, 69190 Walldorf (DE)
(72) Inventor: Haug, Tobias, 69190 Walldorf (DE)
(74) Representative: Richardt Patentanwälte GbR

(57) **Abstract**

The invention relates to a a computer-implemented method of configuring a device (104) to receive gesture inputs, the inputs being characteristic to a particular culture, the method comprising:
- receiving at the device (104) a culture information, the culture information being indicative of the culture within which the device (104) is to be used,
- in response to the reception of the culture information, adapting a cultural setting of the device (104) to the culture; and
- in response to the reception of the culture information, adopting a gesture recognizer of the device (104) to the cultural setting.

## Description

The present invention is generally directed to an enablement of culture-based gestures.

Traditional user input devices such as keyboards and mice may be tethered to a device, and further, they may be universally specified without regards to a user's cultural background. For example, keyboards may be universally designed based on the English alphabet for all users. Recently, user input devices move toward un-tethered inputs such as touch screens. A touch screen may display a graphic user interface (GUI) for a user to interact with the GUI via the touch screen in manners similar to a mouse. For example, buttons may be displayed on a touch screen for the user to select and activate. On the other hand, touch screens also may be used to recognize simple gestures. For example, a touch screen may be used to sense a one-dimensional movement such as left-to-right swaps as an instruction for turning a web page. However, these gesture inputs, although less restrictive, are still based on their utility rather than on a user's cultural background.

Natural gestures also may be used to input user instructions. Human gestures may include hand gestures and/or body gestures. These natural gestures may be sensed by sensors such as video cameras. The sensor data may be further analyzed by a processor to detect these gestures. For example, multiple video cameras may be used to detect and interpret human gestures in three dimensional space. The interpretation of the human natural gestures may be used as input of instructions to a device executing software applications.

One advantage of using human natural gestures as an input command is that they are less restrictive and more natural to a user. Thus, the user may respond and command a machine with gestures that he is adapted to in a society. Since these human gestures are natural just as those used in real life, these gestures may be encoded with cultural differences. Therefore, seemingly the same gestures may have different meanings in different cultural backgrounds. For example, a simple gesture of "thumbs up" may mean "OK" in U.S., "money" in Japan, and "zero" in Indonesia. Thus, if natural gestures are used as command inputs without consideration in the context of cultural differences, the software application may misinterpret the simple "thumbs up" gesture.

It is an object of the invention to provide for a method of configuring a device to cultural environment in which the device is to be used, a respective computer-readable non-transitory medium and a respective device. The invention is described by the independent claims. Preferred embodiments are described in the dependent claims.

The present invention relates to a computer-implemented method of configuring a device to receive gesture inputs, the inputs being characteristic to a particular culture, the method comprising receiving at the device a culture information, the culture information being indicative of the culture within which the device is to be used, in response to the reception of the culture information, adapting a cultural setting of the device to the culture; and in response to the reception of the culture information, adopting a gesture recognizer of the device to the cultural setting.

Embodiments of the invention may have the advantage that depending on the cultural environment, within which the device is used, the behavior of the device is adapted. This behavior adaption may include language settings like automatic font selections or adaptions to keyboard layout settings. In case of touch screen devices, the layout setting may comprise a complete change of the visual appearance of the keyboard displayed on the touch screen. Further, due to the adopting of the gesture recognizer of the device to the cultural setting, the risk of misinterpreting user inputs via the gesture recognizer are minimized. Thus, the combination of the adaption of the cultural setting and the adopting of the gesture recognizer enables a faster, more convenient and thus more effective data entry to the device and control of the device.

Software applications usually may operate under a certain operating environment which may include globally setting certain configurations of the device on which it runs. For example, a SAP Business Object (BO) may allow a global setting to a certain language such as English or Germany. In case that natural gestures are used as the input, using the method of the invention a global setting mechanism can be conveniently provided to adapt the computer system for the gesture inputs based on cultural differences.

In accordance with an embodiment of the invention, the culture information is received via a user input at the device. For example, the user input comprises an explicit request for adapting the device to gestures of the culture. However, it is also possible that the culture information is derived from for example a user identification, which will be described further below. In the alternative or additionally it may be possible to constantly monitor any kinds of user inputs during a user's usage of the device. The device may analyze the user's inputs and deduce a 'typical' cultural behavior. For example, the order of selecting items on a screen of the device may be used to identify the culture within which the device is to be used. For example, in Asia typically counting of items is performed from right to left, whereas in western countries, counting is performed from left to right.

In accordance with an embodiment of the invention, the adaption of the cultural setting of the device comprises assigning a data record representing the cultural setting of the device to the culture. For example, the data record representing the culture setting may comprise a user identification field including a plurality of user identifications and/or a cultural setting field, each corresponding to one user identification and each storing one cultural value representing a culture. In case the input comprises one of the user identifications, the user identification may be received upon a user's logging into the device which executes a login script to identify the user to the device.

In accordance with an embodiment of the invention, the adopting of the gesture recognizer comprises loading a gesture model of the culture and recognizing gestures using the gesture recognizer based on the loaded gesture model. For example, the gestures comprise control commands received by the device by physical movements of the user.

This may have the advantage that the device may be preconfigured to be used in various cultural environments. Thus, a multi-functional and easy to use device can be provided which enables a user intuitively and time efficiently to control the device.

In accordance with an embodiment of the invention, the control commands may comprise positioning information of a position indicator of a screen of the device and/or web browser control commands and/or information related to form filling of electronic forms. For example, in Japan a checkbox is 'checked' using a circle around the box, whereas in Europe a cross is made in the box and in USA a check mark in form of a hook is made. The method thus may have the advantage that the device correctly understands the user's intention to provide information via an electronic form. This information may then be transmitted in a more complex format to a designated recipient of the information comprised in the form. The recipient may be a web service that again may interpret the contents of the form. If said complex format comprises check box information the form of 'yes' or 'no' instead of a cross, it is absolutely sure that the web service is able to understand the content of the form correctly - irrespective of the cultural environment in which the form was filled out by the user.

It has to be noted, that the position indicator may for example be a cursor or a mouse indicator. The web browser control commands may comprise for example 'gestures' known in the prior art.

In accordance with an embodiment of the invention, the control commands are received via a touch input device and/or a visual camera and/or a computer mouse connected to the device.

In accordance with an embodiment of the invention, the gesture model is loaded from a gesture library, the library comprising the gesture model associated with the culture setting.

In accordance with an embodiment of the invention, the culture information is received via a geographical location of the device, wherein the device comprises a first database, wherein the first database comprises a mapping table between the geographical location and the culture information. This permits to automatically select the correct culture within which the device is used.

For example, the geographical location of the device is determined using GPS information provided by a GPS sensor connected to the device and/or a network address of the device and/or a time zone information received at the device and/or information about a mobile telecommunication network received at the device. The network address may comprise an IP address of the device.

The usage of the geographical location of the device permits to fully automatically adapt the above mentioned behavior of the device to its cultural environment.

In another aspect, the invention relates to a computer-readable non-transitory medium stored thereon machine-executable codes that, when executed, perform any of the method steps of the method as discussed above.

In another aspect, the invention relates to a device adapted to receive gesture inputs, the inputs being characteristic to a particular culture, the device comprising an interface for receiving at the device a culture information, the culture information being indicative of the culture within which the device is to be used, a processor, wherein the processor is adapted for adapting a cultural setting of the device to the culture in response to the reception of the culture information; and a gesture recognizer, wherein the processor is further adapted for adopting the gesture recognizer to the cultural setting in response to the adaption of the culture setting of the device.

Embodiments of the present invention may include a method of configuring a device to receive gesture inputs of a particular culture. The method may provides responsive to a user request to adapt a device to gestures of a culture, assigning a data record representing cultural setting of the device to the culture, and responsive to the assigning the culture setting of the device, adopting a gesture recognizer of the device to the culture setting.

A computer-implemented method of configuring a device to receive gesture inputs of a particular culture is described, the method comprising responsive to a user request to adapt a device to gestures of a culture, assigning a data record representing a cultural setting of the device to the culture; and responsive to the assigning the culture setting of the device, adopting a gesture recognizer of the device to the cultural setting.

In accordance with an embodiment of the invention, the data record representing culture setting includes: a user identification field including a plurality of user identifications; and a cultural setting field, each corresponding to one user identification and each storing one cultural value representing a culture.

In accordance with an embodiment of the invention, the adopting of the gesture recognizer includes: loading a gesture model of the culture; and recognizing gestures using the gesture recognizer based on the gesture model of the culture.

In accordance with an embodiment of the invention, the user request includes user's logging into the device which executes a login script to identify the user to the device.

In accordance with an embodiment of the invention, the user request includes user modifies the configuration file via a user interface.

In accordance with an embodiment of the invention, the device is one of a computer, a handheld device, a cell phone, and a game box.

The enclosed drawings disclose preferred embodiments of the invention. It should be understood, however, that the drawings are designed for the purpose of illustration only and not as a definition of the limits of the invention. In the drawings:
FIG. 1 illustrates a system including a culture-based gesture setting.
FIG. 2 illustrates a configuration file including records of gesture setting.
FIG. 3 illustrates a method of determining the culture-based setting from a set of factors.

Gesture recognition and global gesture setting may be realized via a device such as a computer system. Exemplary gesture commands may be recorded using sensors for each cultural background that is needed for software applications. The cultural backgrounds may be grouped according to geographical regions such as a user's nationality or according to the user's ethnicity. Computerized models for gestures of different cultural backgrounds may be built from the recorded gesture commands. For example, using statistical training methods, a computerized model for gestures commonly used by a user from the United States may be built. Thus, based on demand, a number of computerized gesture models, each corresponding to a particular culture, may be built and then stored in a storage. When a user is identified as having a particular cultural background, the computer system may associate an automatic gesture recognizer with the computerized model for that particular cultural background. The gesture recognizer may then be used for recognizing gesture commands.

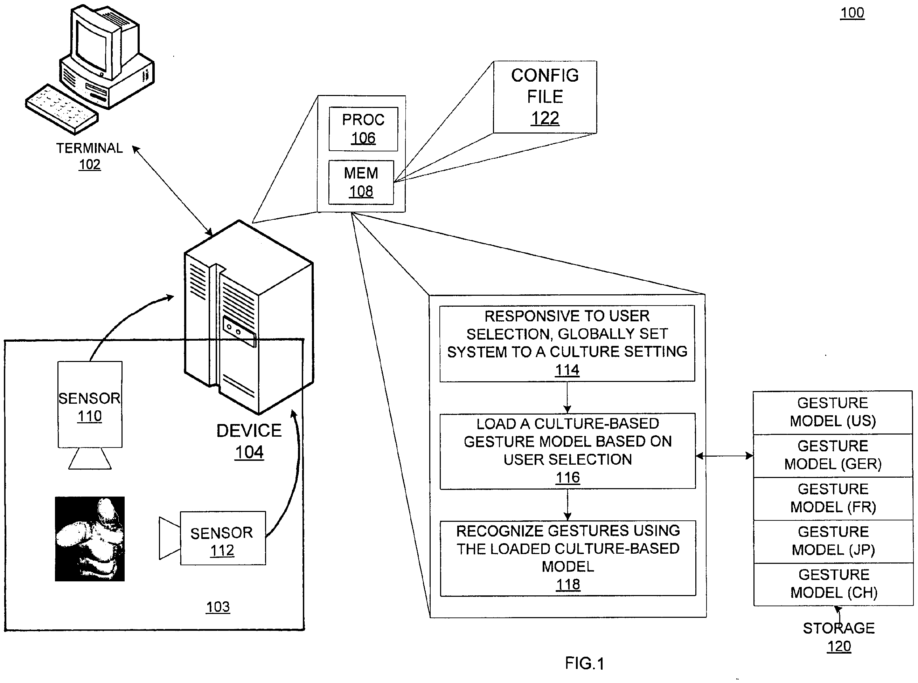

FIG. 1 illustrates a system 100 including a culture-based gesture setting according to an embodiment of the present invention. The system 100 may include a device 104 that may include a first input terminal 102, a second gesture input terminal 103, a processor 106, and a memory 108. The first input terminal 102 may include a keyboard, a mouse, or a touch screen (not shown) for a user to input instructions and data to the device 104. The second input terminal 103 may include sensors 110, 112 for capturing human gestures. The memory 108 may store code executable by the processor 106. In addition, the memory also may store a system configuration file 122 that may specify configurations of the device 104. Exemplary configurations may include language setting, time zone setting, user login files, and cultural settings for gestures. The system further may include a storage 120 to store models each being trained for a particular culture. These models of different cultures may be selectively loaded by the processor 106 to work collaboratively with a gesture recognizer.

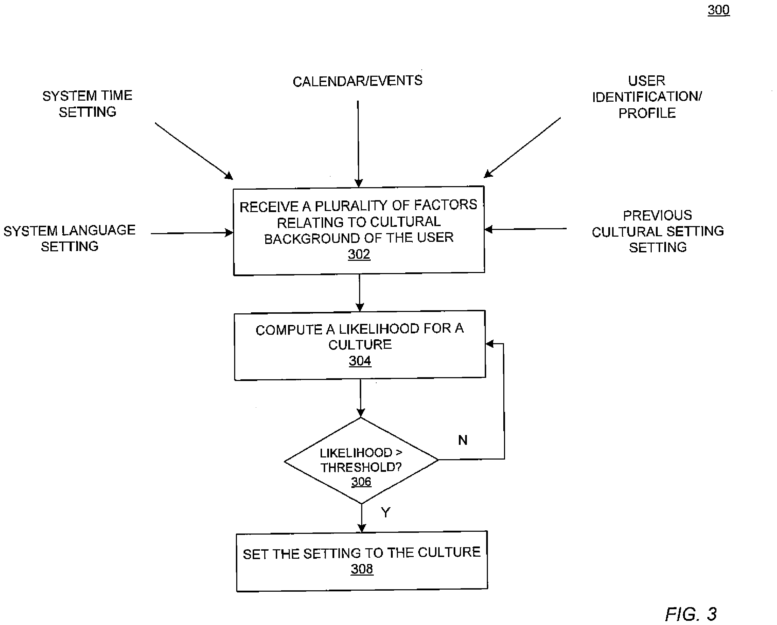

A user may interact with the device 104 via the first input terminal 102 to achieve a number of objectives. In one example embodiment, the user may specify configurations of the device 104 via a user interface displayed on the first input terminal 102 to a particular cultural setting. The cultural setting may be a data record that may be part of and/or linked to a configuration file of the device 104. FIG. 3 illustrates a configuration file that includes records of gesture settings according to an exemplary embodiment of the present invention.

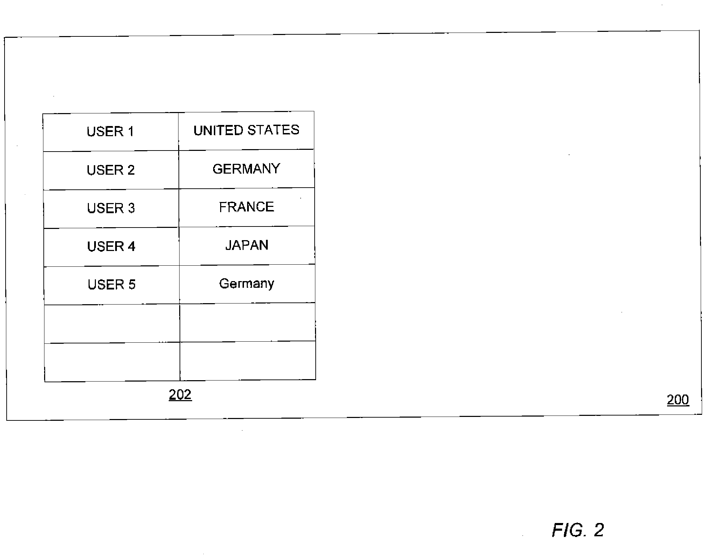

Referring to FIG. 2, a configuration file 200 may be a data record that may specify how the device 104 operates. The configuration file 200 may be a global data record in the sense that it may affect the operation of all applications running on the device 104. In one embodiment, the configuration file 200 may be a data record that includes multiple sub-records such as sub-records for language setting, time zone setting, user login files, and cultural setting for gestures. In this exemplary embodiment, the sub-record 202 of cultural settings for gestures may further include a plurality of data fields, each of the data fields being associated with one user identification (for example, USER 1 to USER 5) and correspondingly a cultural setting (for example, United States, Germany, France, Japan) so that when a user is identified to the device 104, the corresponding cultural setting may be retrieved conveniently through the user identifications. For example, a user may log into the device 104 and thus identify himself with a user identification. The device 104 may retrieve the configuration file 200 and thus associate the user with a pre-identified cultural background.

The complexity of the configuration file 200 may be minimized by providing a sub-record 202 which only comprises minimal user information. For example, instead of 'Germany' or 'France' only 'Western Europe' may be comprised in the file. At the point in time at which the cultural setting has to be adapted, this minimal information could be further specified using position information of the device. For example, from an IP network address of the device, the coarse device location 'Germany' or 'France' may be determined. By combining the knowledge of the device location 'Germany' with the knowledge of the user's culture 'Western Europe', there is a high probability that the exact culture is 'German'. Contrary, in case the user's culture is 'Asia', the knowledge of the device location 'Germany' may lead to the determination that this user may prefer a cultural device behavior which is of a 'general western style with English language'.

The sub-record 202 of cultural settings for gestures may be entered and/or modified by a user via a user interface. For example, a user may edit the cultural settings via word editor from the first input terminal 102. Alternatively, the user may modify the cultural settings via a GUI displaying a number of selections from which the user may choose a particular cultural setting.

In one exemplary embodiment of the present invention, a user may create and record a set of gestures, name the created set of gestures as a new "culture," and add the newly created "culture" of the user as a category of cultural background that may be used as cultural settings. For example, the user may refine or modify gestures of an existing culture and create a new variation of gestures of the existing culture. The user may use touch screens and/or cameras to record the new variations of gestures and train a gesture recognizer using the same. Then, the user may add a new cultural setting category that may correspond to the new variation of the gestures. The new cultural setting category may then be used as any other existing cultural backgrounds.

FIG. 2 illustrates an embodiment in which the cultural setting is associated with the device 104 globally to apply to all applications running on the device 104. In other embodiments, the cultural setting may have finer granularity to the level of applications. For example, the sub-record 202 of cultural settings for gestures may further include a data field for software applications (not shown) so that the cultural setting is specified as applied only to that particular piece of software.

Referring back to FIG. 1, the device 104 also may be coupled to a second input terminal 103 for gesture inputs. The second input terminal may include sensors 110, 112, such as video cameras or touch screens, for capturing gestures in the form of electronic signals. These electronic signals may be fed to a gesture recognizer executed by processor 106 for gesture recognition. As discussed above, cultural differences may vary human gestures and their interpretations. Therefore, models for different cultural backgrounds may be trained from samples of human gestures from different cultures and stored in a storage 120. As exemplarily illustrated in FIG. 1, the storage 120 may store gesture models of United States, Germany, France, Japan, and China in the form of a gesture library. This example is for illustration purpose. Other classifications of cultural backgrounds also may be possible and implemented.

During operation, at 114, a user may, through a user interface, enter and/or modify a cultural setting in a data record contained a configuration file of the device 104 and thus configure the device 104 to that particular cultural setting. Responsive to configuration of the device 104 to the particular cultural setting, a processor 106 of the device 104 may execute a gesture recognizer and load a gesture model of the culture in accordance with the cultural setting as specified by the configuration file. Further, device 104 may receive electronic signals captured from sensors 110, 112. These electronic signals representing user's gesture inputs may be analyzed by the culture-dependent gesture recognizer to recognize gesture inputs such as commands to software applications.

FIG. 1 illustrates an exemplary embodiment in which the cultural setting is directly specified by a user. In other embodiments, the cultural setting of a device may be configured automatically and implicitly based on a number of configuration parameters of the device.

FIG. 3 illustrates a method of determining the culture-based setting from a set of factors according to an exemplary embodiment of the present invention. A device may have been previously configured with a set of parameters that may be related to or reflect the cultural background of its users. A cultural setting for gesture may be derived from these parameters. For example, the device may have been configured with a language setting, a time zone setting, a calendar/event setting, a user profile, and/or a history record of a previous cultural setting. Any one of these factors may provide information relevant to the determination of the cultural setting for the device. For example, in one exemplary embodiment, the cultural setting for the device may be specified according to the system language setting. Therefore, if the language setting is Japanese, the cultural setting may be set to Japan. However, the determination of the cultural setting of device based on a single factor may not be reliable. For example, if the language setting is English, it may not be reliable to set the cultural setting to a particular culture since English is used as the official language by many cultures.

FIG. 3 illustrates an exemplary embodiment in which multiple factors are taken into consideration to automatically determine the cultural setting of a device. At 302, a processor in the device may retrieve a plurality of parameters relating to the determination of cultural setting for gesture recognition. The parameters may respectively represent factors such as "system language setting," "system time setting," "calendar events," "user identification/profile," "previous cultural setting." Based on these parameters, at 304, the processor may compute a likelihood that a user may be associated with a particular culture. The likelihood computation may be based on known statistical methods such as maximum likelihood method, neural network, and fuzzy logic. Responsive to the computed likelihood of a particular culture, at 306, the likelihood may be compared to a pre-determined threshold value. If the likelihood value is greater than the pre-determined threshold value, the processor may, at 308, set the cultural setting for the device to the particular culture. However, if the likelihood is equal to or is less than the threshold value, the processor may similarly compute the likelihood for a second culture and repeat the process for the second culture. This process may continue until all cultures are checked.

The process to determine a cultural setting may be triggered in response to user actions. In one exemplary embodiment, a user logs into a system may trigger the execution of a script to determine the cultural setting of the device for the particular user. In another exemplary embodiment, the start of a software application that accepts gesture inputs may trigger the execution of a script to determine the cultural setting of the device for the particular piece of software application.

In another exemplary embodiment, the cultural setting may be triggered by a gesture that may be ambiguous in the context of different cultures. For example, a default gesture recognizer may operate until a gesture that may be subject to different interpretations in different cultural backgrounds is detected. In response to this gesture by the user, a system of the present invention may display a selection of candidate cultures via a GUI (e.g., a dialogue box) to ask the user's cultural background. In response to a selection of a culture on the GUI by the user, the system may be automatically set to that cultural setting. Further, the gesture recognizer may be adopted to the newly adopted cultural setting.

Although the present invention has been described with reference to particular examples and embodiments, it is understood that the present invention is not limited to those examples and embodiments. Further, those embodiments may be used in various combinations with and without each other.

## Claims

1. A computer-implemented method of configuring a device (104) to receive gesture inputs, the inputs being characteristic to a particular culture, the method comprising:
- receiving at the device (104) a culture information, the culture information being indicative of the culture within which the device (104) is to be used,
- in response to the reception of the culture information, adapting a cultural setting of the device (104) to the culture; and
- in response to the reception of the culture information, adopting a gesture recognizer of the device (104) to the cultural setting.

2. The method of claim 1, wherein the culture information is received via a user input at the device (104).

3. The method of claim 2, wherein the user input comprises an explicit request for adapting the device (104) to gestures of the culture.

4. The method of any of claims 1-3, wherein the adaption of the cultural setting of the device (104) comprises assigning a data record (200) representing the cultural setting of the device (104) to the culture.

5. The method of claim 4, wherein the data record (200) representing the culture setting comprises:
- a user identification field including a plurality of user identifications; and/or
- a cultural setting field, each corresponding to one user identification and each storing one cultural value representing a culture.

6. The method of claim 5, wherein the input comprises one of the user identifications, wherein the user identification is received upon a user's logging into the device (104) which executes a login script to identify the user to the device (104).

7. The method of any of claims 1-6, wherein the adopting of the gesture recognizer comprises:
- loading a gesture model of the culture; and
- recognizing gestures using the gesture recognizer based on the loaded gesture model.

8. The method of claim 7, wherein the gestures comprise control commands received by the device (104) by physical movements of the user.

9. The method of claim 8, wherein the control commands comprise
- positioning information of a position indicator of a screen of the device (104) and/or
- web browser control commands and/or
- information related to form filling of electronic forms.

10. The method of claim 9, wherein the control commands are received via a touch input device (104) and/or a visual camera and/or a computer mouse connected to the device (104).

11. The method of any of claims 7-10, wherein the gesture model is loaded from a gesture library (120), the library (120) comprising the gesture model associated with the culture setting.

12. The method of any of claims 1-11, wherein the culture information is received via a geographical location of the device (104), wherein the device (104) comprises a first database, wherein the first database comprises a mapping table between the geographical location and the culture information.

13. The method of claim 12, wherein the geographical location of the device (104) is determined using
- GPS information provided by a GPS sensor connected to the device (104) and/or
- a network address of the device (104) and/or
- a time zone information received at the device (104) and/or
- information about a mobile telecommunication network received at the device (104).

14. A computer-readable non-transitory medium stored thereon machine-executable
codes that, when executed, perform any of the method steps of the method as claimed in any of the claims 1 to 13.

15. A device (104) adapted to receive gesture inputs, the inputs being characteristic to
a particular culture, the device (104) comprising:
- an interface for receiving at the device (104) a culture information, the culture information being indicative of the culture within which the device (104) is to be used,
- a processor (106), wherein the processor is adapted for adapting a cultural setting of the device (104) to the culture in response to the reception of the culture information; and
- a gesture recognizer (110; 112), wherein the processor is further adapted for adopting the gesture recognizer (110; 112) to the cultural setting in response to the adaption of the culture setting of the device (104).
